# EUROPÄISCHE PATENTSCHRIFT

(11) **EP 1 385 251 B1**
(45) Veröffentlichungstag und Bekanntmachung des Hinweises auf die Patenterteilung: **09.05.2007**
(21) Anmeldenummer: 03015952.9
(22) Anmeldetag: 14.07.2003
(51) Int. Cl.: H02J 5/00

(54) **Vorrichtung mit zwei relativ zueinander bewegbaren Bauteilen und einer Einrichtung zur gleichzeitigen Übertragung von elektrischer Energie und Information zwischen diesen Bauteilen**
Device having two parts being moveable with respect to another and an arrangement for simultaneous transmission of energy and information between these parts
Dispositif avec deux éléments mobiles l'un vers l'autre et un disposition pour transférer de l'energie et des informations simultané entre les deux éléments

(30) Priorität: 26.07.2002 DE 10234893
(43) Veröffentlichungstag der Anmeldung: 28.01.2004
(73) Patentinhaber: SIPRA Patententwicklungs- und Beteiligungsgesellschaft mbH, D-72461 Albstadt (DE)
(72) Erfinder: Haisch, Erwin, 78554 Aldingen (DE)
(74) Vertreter: Freiherr von Schorlemer, Reinfried

(56) Entgegenhaltungen:
- EP-A- 0 539 696
- EP-A- 0 923 182
- US-A- 5 701 121
- PATENT ABSTRACTS OF JAPAN vol. 1997, no. 09, 30. September 1997 (1997-09-30) & JP 09 130998 A (MATSUSHITA ELECTRIC IND CO LTD), 16. Mai 1997 (1997-05-16)

## Beschreibung

Die Erfindung betrifft eine Vorrichtung der im Oberbegriff des Anspruchs 1 angegebenen Gattung.

Bei Vorrichtungen mit einem stationären und einem relativ dazu bewegbaren Bauteil ist es häufig erforderlich, elektrische Energie und Information bzw. Daten, die z. B. in Form von digitalen elektrischen Signalen vorliegen, vom stationären Bauteil auf das bewegbare Bauteil zu übertragen und umgekehrt. Im Fall von Rundstrickmaschinen ist es beispielsweise bekannt (EP 0 431 674 A1), an einem drehbaren Nadelzylinder montierte Auswählmagnete für die Stricknadeln einerseits mit Hilfe von Informationen mustergemäß auszuwählen, die berührungslos von einem stationären Bauteil aus auf den Nadelzylinder übertragen werden, andererseits jedoch die zum Betrieb der Auswählmagnete benötigte elektrische Energie mit Hilfe von Schleifringen zu übertragen.

Daneben kann es insbesondere bei komplexen, weitgehend automatisch betriebenen Rundstrickmaschinen erforderlich sein, Daten von einer stationären Steuereinheit aus an eine mit einem drehbaren Nadelzylinder gekoppelte und zusammen mit diesem drehbare Komponente, z. B. eine Abzugs- und Aufwickelvorrichtung, zu übertragen, um beispielsweise vorgewählte Abzugsspannungen zu erzeugen. In derartigen Fällen ist es häufig auch erwünscht, Meßdaten, die von am drehbaren Teil befindlichen Sensoren, Prozessoren od. dgl. erzeugt werden, an die stationäre Steuereinheit zu senden, wobei diese Meßdaten z. B. der Überwachung von Maschinenzuständen dienen oder als Istwerte in Regeleinrichtungen verwendet werden können. Auch für eine derartige bidirektionale Datenübertragung sind bereits Einrichtungen bekannt (EP 1 085 712 A2), die mit einer induktivven und berührungslosen Kopplung zwischen einem stationären Bauteil und einem drehbaren Bauteil arbeiten. Die Übertragung elektrischer Leistung muß dabei allerdings wie üblich mit Hilfe von Schleifringen erfolgen.

Weiterhin sind Vorrichtungen bekannt (DE 44 12 958 A1), die Mittel zur induktiven, berührungslosen Übertragung sowohl von elektrischer Energie als auch von elektrischer Information aufweisen. Zur Übertragung von Daten zwischen einem Sendemodul und einem Empfangsmodul ist das eine Modul mit einer elektrischen, am Ende reflektionsfrei geschlossenen Leitung versehen, während das jeweils andere Modul als ein mit der Leitung induktiv gekoppelter Sensor ausgebildet ist. Dagegen erfolgt die Energieübertragung mittels einer von der genannten Leitung getrennten, an eine Energiequelle angeschlossenen Koppelschleife, die mit einem zu versorgenden Verbraucher über einen Transformator gekoppelt ist. Bei ähnlichen Vorrichtungen dieser Art (DE 196 49 682 A1), ist zwar ebenfalls eine reflektionsfrei abgeschlossene Leitung vorgesehen, die Energie- und Informationsübertragungjedoch über diese eine Leitung möglich. Die Übertragung der Daten erfolgt hier mit vergleichsweise hohen Frequenzen ab ca. 10 MHz im Vergleich zu Frequenzen von bis zu 100 kHz für die Energieübertragung. Bei Anwendung einer solchen Vorrichtung ist somit zwar eine gemeinsame Übertragungsleitung vorhanden. Im übrigen werden aber auch hier zwei getrennte Systeme für die Übertragung von Energie und Information benötigt.

Die zuerst genannten Vorrichtungen erfordern für die Energieübertragung Schleifringe oder, wie es z. B. bei Flachstrickmaschinen bekannt ist, Schleppkabel. Beides ist wegen der daraus resultierenden konstruktiven Beschränkungen und des unvermeidbaren Verschleißes nicht immer erwünscht. Die zuletzt genannten Vorrichtungen bringen dagegen zwar den Vorteil einer berührungslosen Energie- und Informationsübertragung, aber auch einen nicht unerheblichen konstruktiven Aufwand mit sich, was ihre Anwendung bei Rund- und Flachstrickmaschinen aus Kostengründen behindert. Dasselbe gilt für andere Textilmaschinen, insbesondere Rundflechtmaschinen mit drehbaren Rotoren.

Weiterhin sind Vorrichtungen bekannt (US-A-5 701 121), die überwiegend in sog. Transpondern angewendet werden und daher nur zur Übertragung kleiner Leistungen eingerichtet sind. Ein zusätzlicher Nachteil besteht darin, daß es sich hierbei um offene Systeme mit Sendern und Empfängern handelt, die konstruktiven Beschränkungen zur Vermeidung von Störpegeln od. dgl. unterliegen. Das ist insbesondere bei der Steuerung von Strickmaschinen unerwünscht, wo ohne Störungen große Leistungen übertragen werden müssen.

Schließlich ist eine Vorrichtung der eingangs bezeichneten Gattung bekannt (EP-A-0 539 696), die als schwingungsfähiges System ausgebildet ist. Zur Übertragung von Daten in der einen Richtung werden die von einem Rechteckgenerator erzeugten, der Energie- bzw. Leistungsübertragung dienenden Signale in Abhängigkeit von den zu übertragenden Daten einer Amplitudenmodulation unterworfen. Das hat zur Folge, daß bei der Übertragung einer binären "0" eine Lücke in der Signalübertragung auftritt. Sollen derartige Energieeinbrüche vermieden werden, sind einerseits zusätzliche Mittel zur Lieferung von Energie im Bereich der Lücke und andererseits Beschränkungen im Hinblick auf die Codierung der Information erforderlich. Bei der Übertragung von Information in der entgegengesetzten Richtung treten dagegen Belastungsänderungen in der Sekundäreinheit auf, was ebenfalls unerwünscht ist. Auch diese Vorrichtung ist daher für die Anwendung in Strickmaschinen nicht optimal.

Ausgehend davon liegt der vorliegenden Erfindung das technische Problem zugrunde, die Vorrichtung der eingangs bezeichneten Gattung so auszubilden, daß die berührungslose Energie- und Datenübertragung mit konstruktiv einfachen Mitteln durchführbar ist und dieselben Bauteile zumindest teilweise für beide Übertragungsarten genutzt werden können.

Zur Lösung dieses Problems dienen die kennzeichnenden Merkmale des Anspruchs 1.

Die Erfindung bringt den Vorteil mit sich, daß ein herkömmliches, auf Pulsweitenmodulation (= PWM) basierendes Netzteil in Kombination mit einem nach Art eines Transformators ausgebildeten Übertrager sowohl zur Energie- bzw. Leistungsübertragung als auch zur Übertragung von Information bzw. von digitalen Daten genutzt wird. Dadurch können ohne wesentlichen Mehraufwand beide Übertragungsarten über einen gemeinsamen Kanal und in einer derart verschachtelten Weise realisiert werden, daß gleichzeitig mit der Energie Daten in beide Richtungen übertragbar sind. Außerdem sind integrierte PWM-Schaltkreise in großen Stückzahlen und in vielen Varianten auf dem Markt verfügbar, so daß die komplette Vorrichtung vergleichsweise preisgünstig herstellbar ist.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen Querschnitt durch einen induktiven Übertrager der erfindungsgemäßen Vorrichtung;
Fig. 2 einen Schnitt längs der Linie II - II der Fig. 1;
Fig. 3 eine Seitenansicht des Übertragers in Richtung eines Pfeils x in Fig. 2;
Fig. 4 einen Querschnitt durch ein zweites Ausführungsbeispiel eines induktiven Übertragers der erfindungsgemäßen Vorrichtung;
Fig. 5 eine Draufsicht auf den Übertrager nach Fig. 4;
Fig. 6 ein Ausführungsbeispiel der erfindungsgemäßen Vorrichtung anhand eines Prinzipschaltbilds unter teilweiser Weglassung eines Übertragers nach Fig. 1 bis 5;
Fig. 7 bis 9 Impulsformen an ausgewählten Anschlußpunkten der Vorrichtung nach Fig. 6;
Fig. 10 einen in Fig. 6 zur Vereinfachung der Darstellung weggelassenen Schaltkreis zur Wiedergewinnung von Daten, die mit der Vorrichtung nach Fig. 6 von einem stationären Bauteil auf ein bewegbares Bauteil übertragen wurden;
Fig. 11 Impulsformen an ausgewählten Anschlußpunkten des Schaltkreises nach Fig. 10;
Fig. 12 einen in Fig. 6 zur Vereinfachung der Darstellung weggelassenen Schaltkreis der Vorrichtung zur Übertragung von Daten vom bewegbaren zum stationären Bauteil;
Fig. 13 und 14 Impulsformen an ausgewählten Anschlußpunkten des Schaltkreises nach Fig. 12;
Fig. 15 einen in Fig. 6 zur Vereinfachung der Darstellung weggelassenen Schaltkreis zur Wiedergewinnung von Daten, die mit der Vorrichtung nach Fig. 6 vom bewegbaren zum stationären Bauteil übertragen wurden; und
Fig. 16 Impulsformen an ausgewählten Anschlußpunkten des Schaltkreises nach Fig. 15.

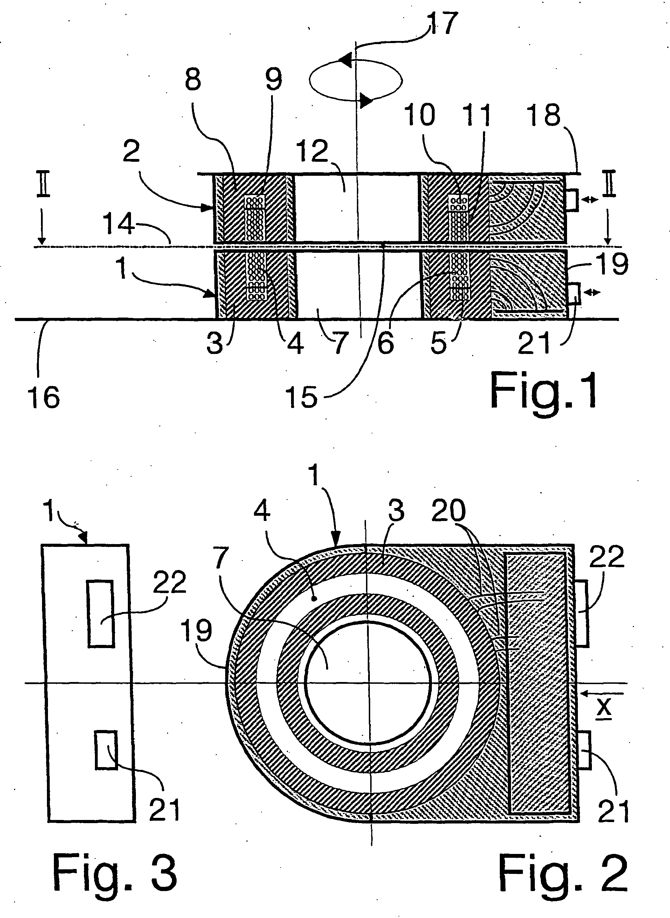

Fig. 1 bis 3 zeigen schematisch einen nach Art eines Transformators ausgebildeten Übertrager einer erfindungsgemäßen Vorrichtung. Der Übertrager enthält eine Primärspulenanordnung 1 und eine Sekundärspulenanordnung 2.

Die Primärspulenanordnung 1 enthält eine erste Kernhälfte 3 aus einem hochwertigen, schnell ummagnetisierbaren Material wie z. B. einem Ferrit, das für hohe Frequenzen geeignet ist. Die Kernhälfte 3 besteht im Ausführungsbeispiel aus einer kreisrunden, ringförmigen Scheibe, in die von einer Breitseite her eine ringförmige, als Wickelraum dienende, umlaufende Nut 4 eingearbeitet ist. In dieser Nut 4 sind eine bis zu ihrem Boden reichende Hilfswicklung 5 und über dieser eine Hauptwicklung 6 angeordnet. Die einzelnen Windungen der beiden Wicklungen 5 und 6 verlaufen kreisförmig um eine Montageöffnung 7 der Kernhälfte 3 herum.

Die Sekundärspulenanordnung 2 enthält eine zweite Kernhälfte 8, die vorzugsweise aus demselben Material und konstruktiv in gleicher Weise wie die erste Kernhälfte 3 ausgebildet ist. Somit enthält die zweite Kernhälfte 8 eine Ringnut 9, in der übereinander je eine Hilfs- und Hauptwicklung 10, 11 liegen, und eine mittlere Montageöffnung 12.

Die beiden Kernhälften 3, 8 sind bei der erfindungsgemäßen Vorrichtung spiegelsymmetrisch zu einer Trennebene 14 derart angeordnet, daß sich diejenigen Breitseiten, von denen aus die Nuten 4 und 9 eingearbeitet sind, einander koaxial gegenüber stehen, jedoch durch einen schmalen Luftspalt 15 voneinander getrennt sind. Die beiden Kernhälften 3 und 8 bilden somit den längs des Luftspalts 15 getrennten Kern eines Transformators mit der Besonderheit, daß die eine Kernhälfte (z. B. 3) mit einem stationären Bauteil 16, die andere Kernhälfte (z. B. 8) dagegen mit einem um eine Drehachse 17 drehbaren Bauteil 18 fest verbunden ist. Dabei ist das stationäre Bauteil 16 z. B. ein Gestellteil und das drehbare Bauteil 18 z. B. der Nadelzylinder oder ein mit diesem mitdrehbares Element einer Rundstrickmaschine.

Die Kernhälften 3, 8 sind in je einem Gehäuse 19 untergebracht, wobei die Wicklungen 5, 6 bzw. 10, 11 über schematisch angedeutete Anschlüsse 20 mit weiter unten näher erläuterten Bauelementen verbunden sind, die in je einem neben der Kernhälfte 3, 8 angeordneten Gehäuseteil untergebracht sind. Die Bauelemente sind außerdem je nach Bedarf an Steckverbinder 21 bzw. 22 angeschlossen, die zum Anschluß an elektrische Spannungsquellen, elektrische Signal- bzw. Datenleitungen od. dgl. dienen.

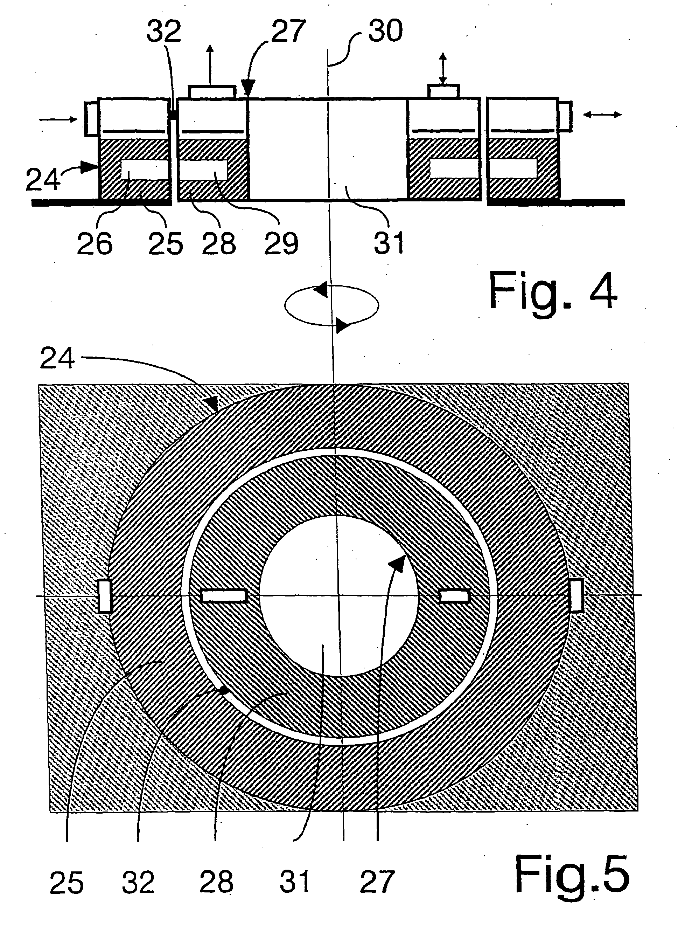

Ein alternatives Ausführungsbeispiel des erfindungsgemäßen Übertragers ist in Fig. 4 und 5 gezeigt. Eine stationäre Primärspulenanordnung 24 enthält eine erste Kernhälfte 25, die kreisringförmig ausgebildet ist und eine Nut 26 aufweist, die in ihre radial nach innen gewandte Mantelfläche eingearbeitet ist. Dagegen enthält eine drehbare Sekundärspulenanordnung 27 eine zweite Kernhälfte 28, die ebenfalls aus einer kreisringförmigen Scheibe besteht und einen Außendurchmesser aufweist, der geringfügig kleiner als der Innendurchmesser der Kernhälfte 25 ist. Außerdem ist die Kernhälfte 28 mit einer Nut 29 versehen, die in ihre radial äußere Mantelfläche eingearbeitet ist. Im Gegensatz zu Fig. 1 bis 3 liegt die zweite Kernhälfte 28 im montierten Zustand koaxial zu einer Drehachse 30 in einer Mittelöffnung 31 der ersten Kernhälfte 25 derart, daß sich die beiden Nuten 26, 29 mit ihren offenen Seiten gegenüber stehen (Fig. 4) und beide Kernhälften 25, 28 durch einen zur Drehachse 30 koaxialen Luftspalt 32 voneinander getrennt sind. Die Sekundärspulenanordnung 27 kann daher um die Drehachse 30 relativ zur Primärspulenanordnung 24 gedreht werden. Den Wicklungen 4, 5 und 10, 11 der Fig. 1 bis 3 entsprechende Wicklungen des Übertragers sind in Fig. 4 und 5 der Einfachheit halber nicht dargestellt.

Hinsichtlich der Übertragung von Energie (bzw. Leistung) und Information (Daten bzw. Signalen) gilt dasselbe wie für den Übertrager nach Fig. 1 bis 3, da in beiden Fällen die Primär- und Sekundärspulenanordnungen 1, 2 bzw. 24, 27 in allen denkbaren Drehstellungen der zweiten Kernhälfte 8 bzw. 28 nach Art eines Transformators induktiv miteinander gekoppelt sind. Dabei könnten im Falle der Fig. 1 bis 5 natürlich auch die zweiten Kernhälften 8 bis 28 stationär und die ersten Kernhälften 3 bzw. 25 drehbar angeordnet sein.

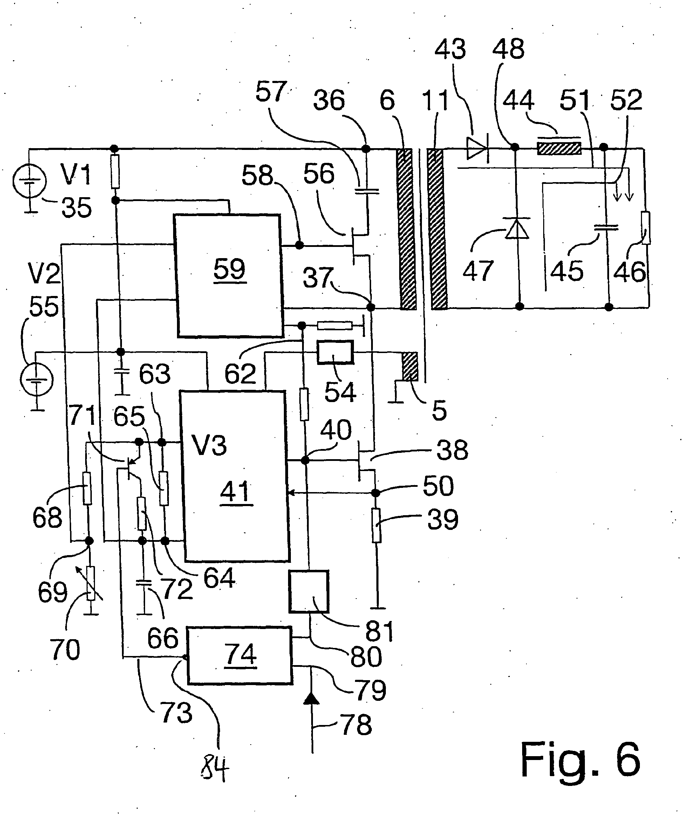

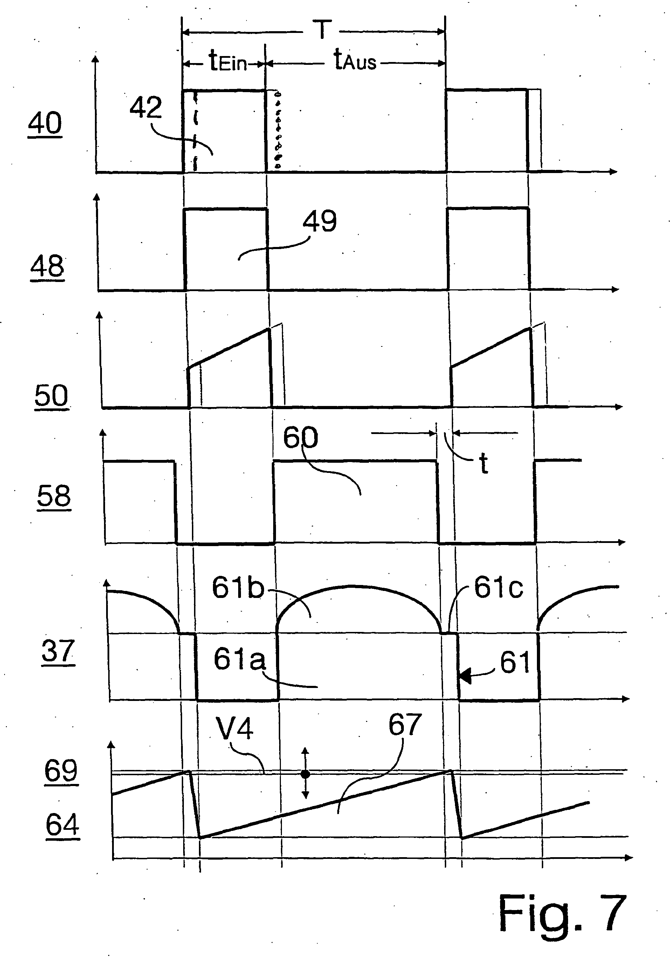

Fig. 6 und 7 zeigen eine erfindungsgemäße Vorrichtung zur Übertragung von Energie von einem feststehendem Bauteil, das in Fig. 6 durch die Hauptwicklung 6 und die Hilfswicklung 5 der Primärspulenanordnung 1 (Fig. 1) repräsentiert ist, auf ein durch die Hauptwicklung 11 der Sekundärspulenanordnung 2 (Fig. 1) repräsentiertes drehbares Bauteil. Die Vorrichtung enthält eine Gleichspannungsquelle 35, die eine Gleichspannung V1 von z. B. ca. 50 V abgibt und deren positiver Pol mit einem Anschlußpunkt 36 der Hauptwicklung 6 verbunden ist. Der negative Pol der Spannungsquelle 35 liegt an Masse. Ein zweiter Anschlußpunkt 37 der Hauptwicklung 6 ist über eine Reihenschaltung aus einem elektrischen Schalter 38, z. B. einem Schalttransistor, und einem Widerstand 39 an das Massenpotential angeschlossen. Ein Steuereingang der Schalters 38 liegt an einem Ausgang 40 einer an sich bekannten PWM-(Pulse-Width-Modulation)-Steuerung 41. Am Ausgang 40 erscheinen Impulse bzw. Schaltsignale 42 in Form von Rechteck-Impulen (Fig. 7) mit einer vorgewählten und im Ausführungsbeispiel änderbaren Taktfrequenz (z. B. ca. 40 kHz bis 100 kHz) bzw. einer entsprechend änderbaren Periodendauer T. Außerdem haben die Schaltsignale jeweils eine Breite t_{Ein}, die die Einschaltdauern der Schalters 38 festlegt. Während der Pausen mit einer Länge t_{Aus} zwischen zwei Schaltsignalen 42 ist der Schalter 38 ausgeschaltet. Die Periodendauer T = t_{Ein} + t_{Aus} bestimmt die Länge eines Taktes PWM-Steuerung 41.

Ein erster Anschluß der Hauptwicklung 11 der Sekundärspulenanordnung 2 (Fig. 1) ist über eine erste Diode 43, eine Speicherdrossel 44 und einen Kondensator 45 mit einem zweiten Anschluß der Hauptwicklung 11 verbunden. Parallel zum Kondensator 45 liegt ein Verbraucher 46, der hier als ohmsche Last angedeutet ist. Schließlich ist eine zweite Diode 47 vorgesehen, deren Anode mit dem zweiten Anschluß der Hauptwicklung 11 und deren Katode mit einem Anschlußpunkt 48 zwischen der ersten Diode 43 und der Speicherdrossel 44 verbunden ist. Während der Phasen t_{Ein} des Schalters 38 werden daher am Anschlußpunkt 48 Spannungsimpulse 49 (Fig. 7) mit einer Form erzeugt, die dem Verlauf der Schaltsignale 42 entspricht. Außerdem fließt an einem Anschlußpunkt 50 zwischen dem Schalter 38 und dem Widerstand 39 ein Strom, der wegen des Vorhandenseins der Hauptwicklung 6 während der Einschaltdauern t_{Ein} des Schalters 38 im wesentlichen einen sägezahnförmigen Verlauf hat. Der Anschlußpunkt 50 kann mit der PWM-Steuerung 41 verbunden werden und zu deren Abschaltung dienen, falls der Strom durch die Hauptwicklung 6 einen kritischen Wert überschreitet.

Die PWM-Steuerung 41 bildet zusammen mit der Spannungsquelle 35 ein übliches Netzteil auf PWM-Basis, d. h. ein sogenanntes Schaltnetzteil, wobei allerdings im Gegensatz zu bekannten Anwendungen die vom Netzteil abgegebene elektrische Energie über den aus den beiden Hauptwicklungen 6, 11 gebildeten Übertrager zum Verbraucher 46 geleitet wird, der zusammen mit der Sekundärspulenanordnung am drehbaren Bauteil 18 (Fig. 1) montiert ist. Wie bei einer üblichen PWM-Steuerung wird daher während der Phasen t_{Ein} des Schalters 38 elektrische Energie in der Speicherdrossel 44 im Kondensator 45 gespeichert, wobei entsprechend einem Pfeil 51 in Fig. 6 bei im Sperrzustand befindlicher Diode 47 ein Strom durch die Diode 43 und die Speicherdrossel 44 fließt, wohingegen während der Phasen t_{Aus} des Schalters 38 die gespeicherte Energie bei jetzt im Sperrzustand befindlicher Diode 43 über die zweite Diode 47 abfließen kann (Pfeil 52 in Fig. 6). Dabei ist die Anordnung zweckmäßig so, daß die Diode 43 jeweils nur kurz leitend wird und der Hauptteil des durch sie fließenden Stroms beim Leitendwerden der Diode 47 bereits abgeklungen ist.

Im übrigen sind in Fig. 7 mit je einer gestrichelten und einer punktierten Linie schematisch die Impulsformen der Schaltsignale 42 für Fälle angedeutet, in denen die zu übertragenden Leistungen gegenüber den durchgezogen dargestellten Zuständen kleiner bzw. größer sind. Dabei repräsentieren die gepunkteten Linien für die Schaltsignale 42 und die Ströme am Anschlußpunkt 50 die maximal zu übertragende Leistung, woraus ersichtlich ist, daß auch bei maximaler Leistung das aus dem Quotienten t_{Ein}/T gebildete Tastverhältnis vergleichsweise klein und vorzugsweise kleiner als 0,5 ist und vorzugsweise z. B. ca. 0,25 beträgt.

Schließlich werden Netzteile der beschriebenen Art normalerweise in der Weise geregelt, daß bei größer bzw. kleiner werdender Last 46 automatisch das Tastverhältnis t_{Ein}/T entsprechend angepaßt wird, um die Spannung am Verbraucher 46 konstant zu halten. Als Istwert wird für diesen Zweck normalerweise die Spannung am Verbraucher 46 verwendet, die in der PWM-Steuerung 41 mit einem Sollwert verglichen und über eine entsprechende Änderung der Größe t_{Ein} der Schaltsignale 42 auf einem konstanten Wert gehalten wird. Da der Verbraucher 46 im Ausführungsbeispiel an einem drehbaren Bauteil montiert ist, kann seine Spannung jedoch nicht ohne weiteres zur PWM-Steuerung 41 zurückgeführt werden.

Erfindungsgemäß dient für diesen Zweck die Hilfswicklung 5 der Primärspulenanordnung 1 (Fig. 1 und 6), deren einer Anschluß an Masse liegt und deren anderer Anschluß über eine Gleichrichterschaltung 54, die im wesentlichen aus den Bauelementen 43, 44, 45 und 47 entsprechenden Bauelementen bestehen kann, mit einem Istwert-Eingang der PWM-Steuerung 41 verbunden ist. Da die Wicklungen 6, 11 und 5 gemäß Fig. 1 auf demselben Kern 3, 8 liegen, hat ein Spannungsabfall in der Hauptwicklung 11 eine entsprechende Spannungsänderung in der Hilfswicklung 5 zur Folge. Daher bilden sich Laständerungen im Sekundärkreis im Ausgangssignal der Hilfswicklung 5 derart ab, daß dieses für die gewünschte Regelung geeignet ist. Die Spannungsversorgung für die PWM-Steuerung 41 erfolgt im übrigen z. B. mit Hilfe einer Gleichspannungsquelle 55, deren Spannung V2 z. B. ca. 14 V beträgt.

Die aus Fig. 6 ersichtliche Schaltung erfordert weiter eine Abführung bzw. Vernichtung der während der Phasen t_{Ein} in der Hauptwicklung 6 der Primärspulenanordnung gespeicherten Energie. Dies erfolgt erfindungsgemäß mit Hilfe eines zweiten elektrischen, z. B. als Schalttransistor ausgebildeten Schalters 56 (Fig. 6), der mit einem Kondensator 57 eine zwischen den Anschlußpunkten 36 und 37 liegende Reihenschaltung bildet. Der Steueranschluß des Schalters 56 liegt an einem Steuerausgang 58 einer Steuerschaltung 59. An diesem Steuerausgang 58 erscheint gemäß Fig. 7 immer dann ein Schaltsignal 60, wenn das Schaltsignal 42 den Schalter 38 in den ausgeschalteten bzw. sperrenden Zustand schaltet. Die Lage der hinteren, negativen Flanke des Schaltsignals 42 entspricht dabei der Lage der vorderen, positiven Flanke des Schaltsignals 60. Die Spannungsversorgung der Steuerschaltung 59 erfolgt mit Hilfe der Spannungsquelle 55.

Die Einschaltung des Schalters 56 hat zur Folge, daß sich die zuvor aufgeladene Hauptwicklung 6 entlädt. Wegen des üblichen Verhaltens von Induktivitäten entsteht am Anschlußpunkt 37 beim Abschalten des Schalters 38 eine Gegenspannung (Gegen-EMK), die wesentlich größer als die Spannung V1 der Spannungsquelle 35 sein kann und daher begrenzt werden muß, damit beim Abschaltvorgang keine schädlichen Überspannungen entstehen, die z. B. den Schalter 38 beschädigen könnten. Um dies zu erreichen und um gleichzeitig sicherzustellen, daß die Gegenspannung beim Beginn der nächsten t_{Ein}-Phase vollständig abgebaut ist, werden die Kapazität des Kondensators 57 und die Einschaltdauer des Schalters 56 so gewählt, daß sich am Anschluß 37 der aus Fig. 7 ersichtliche Verlauf von Signalen 61 ergibt. Die Signale 61 setzen sich aus einem der Spannung V1 entsprechenden Anteil 61a und einem durch die Gegen-EMK verursachten Anteil 61b zusammen, der spätestens beim Ausschalten des Schalters 56 vollständig verschwunden ist.

Damit die Schaltsignale 61 unter allen denkbaren Umständen immer erst gleichzeitig mit oder kurz nach den negativen Flanken der Schaltsignale 42 erscheinen und Kurzschlüsse über die Schalter 38, 56 vermieden werden, ist der Ausgang 40 der PWM-Steuerung 41 über eine Leitung 62 mit der Steuerschaltung 59 verbunden. Dadurch werden die Schaltsignale 60 am Steuerausgang 58 erst dann freigegeben, wenn die negativen Flanken der Schaltsignale 42 von der Steuerschaltung 59 erkannt worden sind. Das gilt unabhängig davon, wie groß jeweils die Einschaltzeiten t_{Ein} für den Schalter 38 sind.

Aus denselben Gründen ist es erwünscht, die Ausschaltzeitpunkte für den Schalter 56 bzw. die Lagen der negativen Flanken der Schaltsignale 60 am Steuerausgang 58 so zu wählen, daß unter allen denkbaren Umständen sichergestellt ist, daß sich der Schalter 56 beim erneuten Einschalten des Schalters 38 wieder im Sperrzustand befindet. Das könnte z. B. dadurch erreicht werden, daß den Schaltsignalen 60 eine vorgewählte (konstante) Breite gegeben wird, die auch bei der größten zulässigen Impulsbreite t_{Ein} des Schaltsignals 42 kleiner ist, als dem Wert t_{Aus} bei dieser Impulsbreite entspricht. Das ist in Fig. 7 erkennbar, wo auf den durch die Gegen-EMK bedingten Signalabschnitt 61b noch ein kurzer Signalabschnitt 61c folgt, dessen Breite t so gewählt ist, daß der Schalter 56 stets unabhängig davon rechtzeitig ausgeschaltet wird, ob der Einschaltvorgang dieses Schalters 56 mit der in Fig. 7 angedeuteten gestrichelten oder punktierten Hinterflanke des Schaltsignals 42 gestartet wurde. Allerdings wäre die Breite t des Signalabschnitts 61c in diesem Fall von der Impulsbreite t_{Ein} unabhängig und fest vorgegeben.

Damit das Zeitintervall t möglichst klein gewählt und gegebenenfalls an sich ändernde Verhältnisse angepaßt werden kann, die auch mit der weiter unten erläuterten Datenübertragung zusammenhängen, wird das Netzteil erfindungsgemäß mit Mitteln versehen, die eine Einstellung des Intervalls t ermöglichen. Gemäß Fig. 6 werden hierzu zunächst zwei Ausgänge 63 und 64 der PWM-Steuerung 41 durch einen Widerstand 65 verbunden, wobei gleichzeitig der Ausgang 64 über einen Kondensator 66 an Masse gelegt wird. Am Ausgang 63 erscheint dabei eine üblicherweise, in der PWM-Steuerung 41 erzeugte Referenzspannung V3, während der Ausgang 64 dazu dient, die interne Taktfrequenz der PWM-Steuerung 41 festzulegen und gleichzeitig ein Taktsignal abzugeben. Dies erfolgt dadurch, daß der Kondensator 66 beim Anliegen der Referenzspannung V3 am Ausgang 63 über den Widerstand 65 sägezahnförmig aufgeladen und beim Erreichen eines in der PWM-Steuerung 41 vorgegebenen Schwellwertes wieder entladen wird. Ein dadurch am Ausgang 64 erhaltenes, sägezahnförmiges Signal 67 ist in Fig. 7 dargestellt und wird außerdem einem Eingang der Steuerschaltung 59 zugeführt. Durch geeignete Bemessung des Widerstandes 65 und des Kondensators 66 wird somit die Frequenz und damit auch die Periodendauer T des internen Takts der PWM-Steuerung 41 mit der Folge festgelegt, daß das Schaltsignal 42 am Ausgang 40 dieselbe Frequenz und Periodendauer T wie das Signal 67 besitzt. Die negative Flanke des Schaltsignals 42 wird dabei nach Ablauf der Zeitspanne t_{Ein} wie beschrieben durch die Regelung mittels der Hilfswicklung 5 erzeugt.

Mit dem Ausgang 63 ist gemäß Fig. 6 über einen Widerstand 68 auch ein Eingang 69 der Steuerschaltung 59 verbunden. Dieser Eingang 69 ist außerdem über einen einstellbaren Widerstand 70 an Masse gelegt. Die Reihenschaltung der beiden Widerstände 68 und 70 stellt einen Spannungsteiler für die am Ausgang 63 anliegende Referenzspannung V3 dar. Die durch Spannungsteilung erhaltene und in Fig. 7 dargestellte Gleichspannung V4 wird in der Steuerschaltung 59 mit Hilfe eines Komparators od. dgl. mit dem Sägezahnsignal 67 verglichen, und immer dann, wenn die Amplitude des Sägezahnsignals 67 mit der Gleichspannung V3 am Eingang 69 übereinstimmt, wird von der Steuerschaltung 59 die negative Flanke des am Ausgang 58 erscheinenden Schaltsignals 60 (Fig. 7) erzeugt.
Die Lage dieser negativen Flanke kann durch Einstellung des Widerstandes 70 beliebig verändert und so gewählt werden, daß die Breite t des Signalabschnitts 61c der Gegen-EMK im Signal 61 möglichst klein ist, damit die Gegen-EMK innerhalb eines möglichst breiten Signalabschnitts 61b abgebaut wird und daher schädliche Überspannungen sicher vermieden werden. Mit anderen Worten wird die positive Flanke des Signals 61 durch die negative Flanke des Schaltsignals 42 und die negative Flanke des Signalabschnitts 61b durch den Schnittpunkt der Spannungen V4 und 67 festgelegt.

Nach einer weiteren Besonderheit ist das beschriebene Schaltnetzteil erfindungsgemäß so eingerichtet, daß nicht nur das Tastverhältnis t_{Ein}/T, sondern auch die Frequenz bzw. die Periodendauer T der Schaltfrequenz verändert und im bevorzugten Ausführungsbeispiel auf zwei unterschiedliche Werte eingestellt werden kann. Zu diesem Zweck ist dem Widerstand 65 gemäß Fig. 6 eine Serienschaltung aus einem dritten elektrischen Schalter 71 und einem weiteren Widerstand 72 parallel geschaltet. Der Steuereingang des Schalters 71 ist über eine Steuerleitung 73 mit einer Schaltung 74 verbunden, deren Bedeutung weiter unten erläutert ist. Wird dem Schalter 71 über die Steuerleitung 73 ein Schaltsignal zugeführt, hat dies eine Parallelschaltung der Widerstände 65 und 72 und damit eine Verkleinerung der aus den Widerständen 65, 72 gebildeten Parallelschaltung zur Folge. Dadurch wird der Kondensator 66 jeweils schneller als beim Fehlen des Widerstandes 72 aufgeladen und der interne Schwellwert der PWM-Steuerung 41 entsprechend früher erreicht. Als Folge davon wird die Periodendauer T des sägezahnförmigen Taktsignals 67 (Fig. 7) verkleinert bzw. die Frequenz dieser Signale erhöht, was gleichbedeutend damit ist, daß auch die Frequenz der Schaltsignale 42 für den Schalter 38 entsprechend erhöht wird. Über die PWM-Regelung der Spannung an der Last 46 mit Hilfe der Hilfswicklung 5 wird dabei gleichzeitig und automatisch die Einschaltdauer t_{Ein} des Schalters 38 etwas reduziert, um bei sonst gleichen Verhältnissen dieselbe Leistung zu übertragen.

Die Frequenzänderung des Signals 67 hat schließlich auch zur Folge, daß die Ausschaltzeitpunkte für den Schalter 56 entsprechend früher liegen, d. h. automatisch der erhöhten Frequenz angepaßt werden. Daher hat eine Frequenzänderung mittels des Schalters 71 bzw. des Widerstands 72 keinen wesentlichen Einfluß auf das Zeitintervall t in Fig. 7. Etwaige Frequenzänderungen bewirken vielmehr eine automatische Anpassung.

Die Übertragung von Informationen bzw. Daten vom feststehenden Bauteil 16 zum drehbaren Bauteil 18 (Fig. 1) erfolgt erfindungsgemäß in der nachfolgend beschriebenen Weise. Dabei sind die Begriffe "Information" bzw. "Daten" wie auch bei der weiter unten erläuterten Datenübertragung vom drehbaren Bauteil 18 zum feststehenden Bauteil 16 im allgemeinsten Wortsinn zu verstehen, obwohl es sich in praktischen Fällen wie im Ausführungsbeispiel in der Regel nur um die Übertragung von logischen "0"- und "1"-Signalen handelt, die in irgendeinem seriellen Bitmuster angeordnet sind.

Die zu übertragenden Daten werden in Fig. 6 seriell über eine Leitung 78 zugeführt, die mittels einer geeigneten Schnittstelle (z.B. einer üblichen seriellen Schnittstelle RS 232) an den stationär angeordneten Ausgang eines PC, einer Maschinensteuerung für eine Rundstrickmaschine od. dgl. angeschlossen ist. Die Zuführung der Daten bzw. "0"- und "1"-Signale erfolgt mit einer Baudrate von z. B. 7800 Bit/s, d. h. mit einer Frequenz, die kleiner als die Frequenz der Schaltsignale 42 ist.

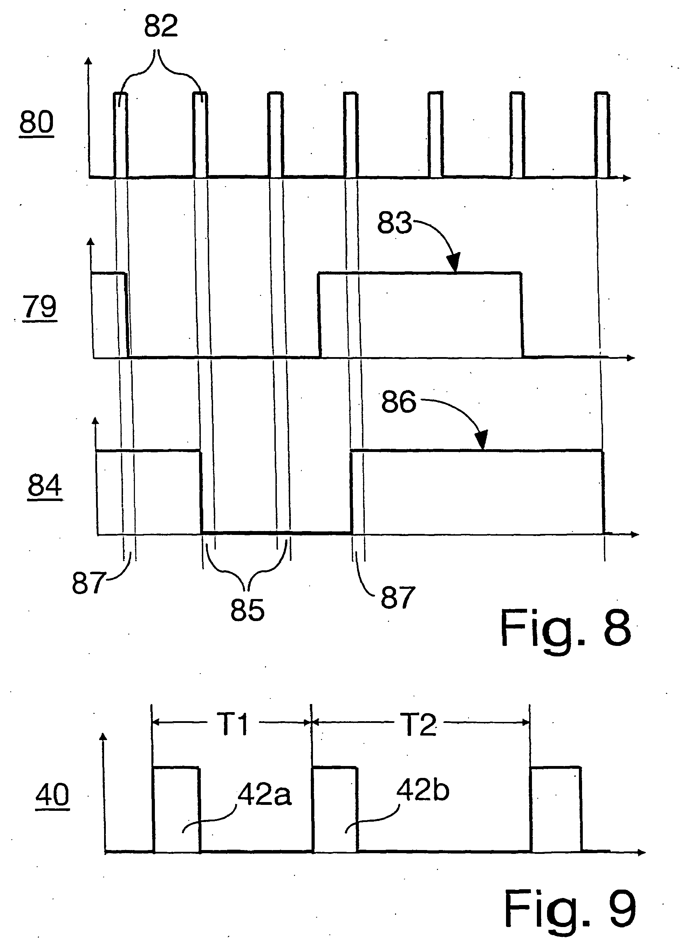

Die Daten werden zunächst einem Eingang 79 der Schaltung 74 zugeführt, die einen zweiten Eingang 80 aufweist. Dieser ist über einen Block 81 an den Ausgang 40 der PWM-Steuerung 41 angeschlossen. Der Block 81 dient dabei der Umwandlung der Schaltsignale 42 am Ausgang 40 in für die Datenverarbeitung geeignete Signale 82 (Fig. 8) mit einem entsprechend niedrigeren Pegel. In Fig. 8 sind außerdem schematisch die zu übertragenden, am Eingang 79 erscheinenden Daten anhand einer Signalfolge 83 dargestellt, innerhalb von der ein auf einem hohen Niveau H befindliches Signal eine logische "1" und ein auf einem niedrigen Niveau L befindliches Signal eine logische "0" bedeuten. Dabei können die Daten in jeder beliebigen Code- bzw. Zeichenform angeordnet sein und Start- und Stopbits, Paritätsbits usw. enthalten. Außerdem erfolgt die Datenzufuhr asynchron.

In der Schaltung 74 werden die am Eingang 79 erscheinenden Daten und die am Eingang 80 erscheinenden Signale 82 z. B. mittels einer UND-Funktion untersucht. Befindet sich die Signalfolge 83 zum Zeitpunkt der positiven Flanken eines Signals 82 auf dem Pegel L, dann wird dies als logische "0" erkannt und ein Ausgang 84 der Schaltung 74 (Fig. 6 und 8) auf L gesetzt, wie z. B. an den Stellen 85 in Fig. 8 angedeutet ist. Folglich wird der z. B. als PNP-Transistor ausgebildete Schalter 71 in seinem eingeschalteten bzw. leitenden Zustand gehalten, so daß beide Widerstände 65 und 68 wirksam sind und die PWM-Steuerung 41 mit der größeren Frequenz bzw. kleineren Periode T arbeitet.

Befindet sich die Signalfolge 83 beim Erscheinen eines Signals 82 dagegen auf dem Pegel H, dann wird das als logische "1" erkannt und der Ausgang 84 des Schalters 74 auf H gesetzt (Signal 86 in Fig. 8), wodurch der Schalter 71 über die Steuerleitung 73 in den Sperrzustand bzw. in den nichtleitenden Zustand geschaltet wird, wie in Fig. 8 an den Stellen 87 angedeutet ist. Dadurch ist nur noch der Widerstand 65 wirksam, so daß die Periodendauer T der Schaltsignale 42 für den Schalter 38 erhöht wird mit der Folge, daß bereits das nächste Schaltsignal 42 bzw. das nächste Signal 82 um eine Zeitspanne verzögert erscheint, die der entsprechend vergrößerten Periodendauer T der Schaltsignale 42 entspricht. Dies ist eine Folge davon, daß das Sägezahnsignal 67 (Fig. 7), das mit Beginn des Schaltsignals 42 gestartet wurde, wegen der längeren Ladezeit des Kondensators 66 jetzt eine längere Periode T hat. Mit Hilfe des Sägezahn-Signals 67 und der Spannung am Eingang 69 wird dabei automatisch die Einschaltdauer des Schalters 56 verlängert. Wird das Signal am Ausgang 84 zu irgendeinem Zeitpunkt und mit Beginn eines Schaltsignals 42 wieder auf L gesetzt, dann erhält das Schaltsignal 42 wegen der Abschaltung des Schalters 71 automatisch wieder die kurze Periodendauer T.

Die auf die beschriebene Weise erhaltene Änderung der Frequenz bzw. der Periode T der Schaltsignale 42 ist in Fig. 9 vergrößert dargestellt. Die Erkennung einer logischen "0" in der Schaltung 74 entspricht einer hohen Frequenz mit einer kurzen Periodendauer T1 eines Schaltsignals 42a. Wird dagegen eine logische " 1 " erkannt, wird die Frequenz eines Schaltsignals 42b reduziert bzw. seine Periodendauer auf den Wert T2 erhöht. Diese Veränderung der Schaltsignale 42 der PWM-Steuerung 41 in Abhängigkeit von den zu übertragenden Daten ist im Ausführungsbeispiel derart gewählt, daß z. B. T1 = 24,7 µs und T2 = 27,6 µs gilt. Damit stellt die logische Schaltung 74 ein am stationären Bauteil montiertes Mittel zur Modifizierung der Taktfrequenz bzw. der Periodendauer T des Schaltnetzteils in Abhängigkeit von der vom stationären Bauteil zum drehbaren Bauteil zu übertragenden Information dar.

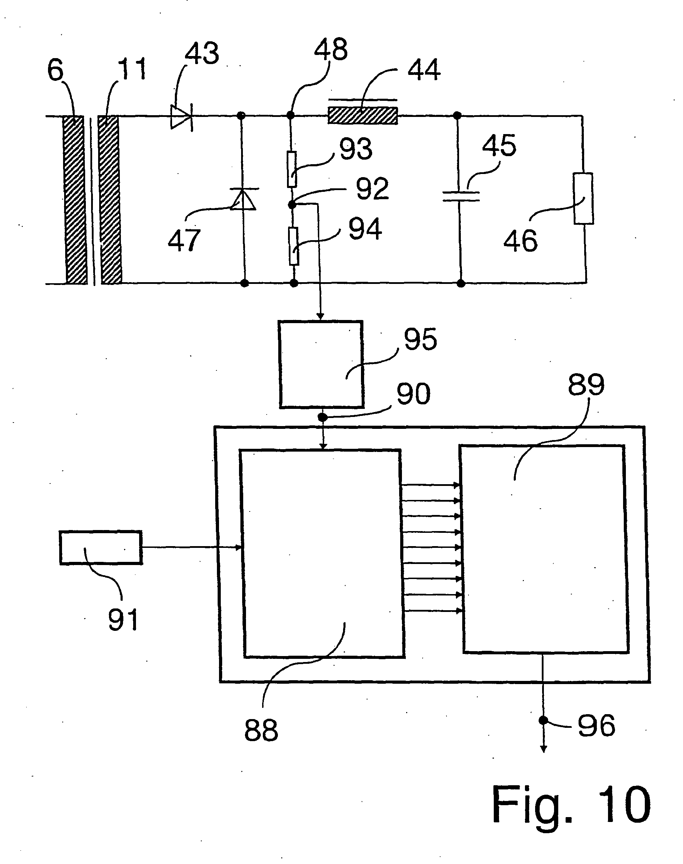

Das drehbare Bauteil weist erfindungsgemäß ein Mittel zur Wiedergewinnung der Information aus den modifizierten Schaltsignalen 42 auf, die in der aus Fig. 7 ersichtlichen Weise und nahezu identisch am Anschlußpunkt 48 (Fig. 6) der Sekundärkreises abgebildet werden. Dieses Mittel umfaßt nach Fig. 10, in der gleiche Teile mit denselben Bezugszeichen wie in Fig. 6 versehen sind, einen Zähler 88 und eine an dessen Ausgang angeschlossene Auswerteeinheit 89. Ein Schalteingang 90 des Zählers 88 ist mit dem Anschlußpunkt 48 in Fig. 6 verbunden, während ein Zähleingang des Zählers 88 mit einem Taktgenerator 91 verbunden ist, der Taktsignale mit einer erheblich größeren Frequenz (z. B. 16 MHz) erzeugt, als der Frequenz der Schaltsignale 42 entspricht.

Wie Fig. 10 weiter zeigt, wird vorzugsweise nicht die am Anschlußpunkt 48 erscheinende Spannung, sondern eine reduzierte Spannung dem Eingang 90 des Zählers 88 zugeführt. Diese reduzierte Spannung wird einerseits an einem Anschlußpunkt 92 zwischen zwei in Reihe geschalteten Widerständen 93, 94 abgegriffen, die einen Spannungsteiler bilden, der der zweiten Diode 47 in Fig. 6 parallel geschaltet ist. Andererseits wird diese Spannung mit einem dem Block 81 in Fig. 6 entsprechenden Block 95 auf einen für die logische Datenverarbeitung geeigneten Pegel reduziert und in dieser aufbereiteten Form dem Schalteingang 90 zugeführt. Hinsichtlich der Periodendauer diese Signale ändert sich dadurch im Vergleich zum Anschlußpunkt 48 und dem Ausgang 40 der PWM-Steuerung 41 nichts.

Der Zähler 88 wird mit jeder positiven Flanke eines Impulses 49 bzw. der am Anschlußpunkt 92 gebildeten Spannung zurückgesetzt und gleichzeitig neu gestartet. Die daraufhin gezählten Taktimpulse des Taktgenerators 91 führen daher jeweils zu Zählerständen, die von der Periodendauer T1 bzw. T2 der Schaltsignale 42a, 42b in Fig. 9 bzw. den entsprechenden Periodendauern der Signale an den Anschlußpunkten 48 bzw. 92 abhängen. Bei einer Taktfrequenz von 16 MHz bedeutet das, daß beim obigen Beispiel eine Periodendauer von 24,7 µs einem Zählerstand von ca. 395 und eine Periodendauer von 27,6 µs einem Zählerstand von 442 entsprechen würde. Die Auswerteeinheit 89 kann daher z. B. so eingestellt werden, daß sie bei einem Zählerstand von weniger 418 eine logische "0" und bei einem Zählerstand von mehr als 418 eine logische "1" an einem Ausgang 96 abgibt.

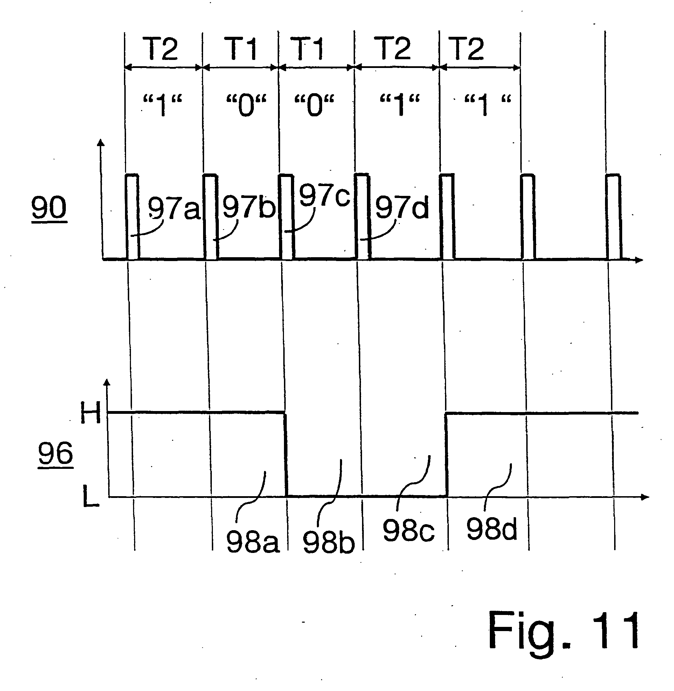

Die Signale am Eingang 90 des Zählers 88 und am Ausgang 96 der Auswerteeinheit 89 sind in Fig. 11 dargestellt. Danach hat ein erstes Signal 97a am Eingang 90 einen Zustand H am Ausgang 96 zur Folge, was in Fig. 11 durch einen Signalabschnitt 98a angedeutet ist. Ein Signal 97b am Eingang 90 führt dagegen zu einem Zustand L am Ausgang 96 (Signalabschnitt 98b). Entsprechendes gilt für ein Signal 97c am Eingang 90 (Signalabschnitt 98c am Ausgang 96). Schließlich hat ein Signal 97d einen Signalzustand H (Signalabschnitt 98d) am Ausgang 96 usw. zur Folge. Dabei zeigt ein Vergleich der Signale 97 und 98, daß beide zeitlich jeweils um eine Periode relativ zueinander verschoben sind. Das ist dadurch bedingt, daß z. B. die Periodendauer T1 z. B. des Signals 97b erst abgelaufen sein muß, bevor der Zählerstand feststeht, der über die Auswerteeinheit 89 darüber entscheidet, ob wie hier eine logische "0" oder eine logische "1" vorliegt. Entsprechend führt das Signal 97d erst nach Ablauf der zugehörigen Periode T2 zu dem Ergebnis, daß ihm der Zustand H am Ausgang 96 zugeordnet werden muß. Da diese Verschiebung um ca. eine Periodendauer jedoch für alle Signale am Ausgang 96 gilt, stellt die Datenfolge am Ausgang 96 ein genaues Äquivalent zu der in Fig. 8 dargestellten, am Eingang 79 der Schaltung 74 erscheinenden Daten- bzw. Bitfolge dar.

Erfindungsgemäß wird daher für die Datenübertragung vom stationären Bauteil zum drehbaren Bauteil derselbe induktive Übertrager wie für die Energieübertragung genutzt, indem die Schaltsignale 42 der PWM-Steuerung 41 bzw. des Schaltnetzteils nach Art einer Frequenzmodulation modifiziert werden. Da der Datenstrom hierbei asynchron übertragen wird, ist die beschriebene Verschiebung am Ausgang 96 der Fig. 10 unbedeutend. Die Lagen etwa vorhandener Start- und Stopbits im Datenstrom bleiben unverändert. Abgesehen davon sind die durch die Datenübertragung verursachten Änderungen im Sekundärkreis unbedeutend, weshalb sie keine wesentliche Auswirkung auf die Energieübertragung zum Verbraucher 46 haben.

Die Übertragung von Informationen bzw. Daten vom drehbaren Bauteil 18 zum stationären Bauteil 16 erfolgt erfindungsgemäß in der nachfolgend beschriebenen Weise, wobei es sich auch hier insbesondere um die Übertragung von "0"- und "1"-Signalen handelt.

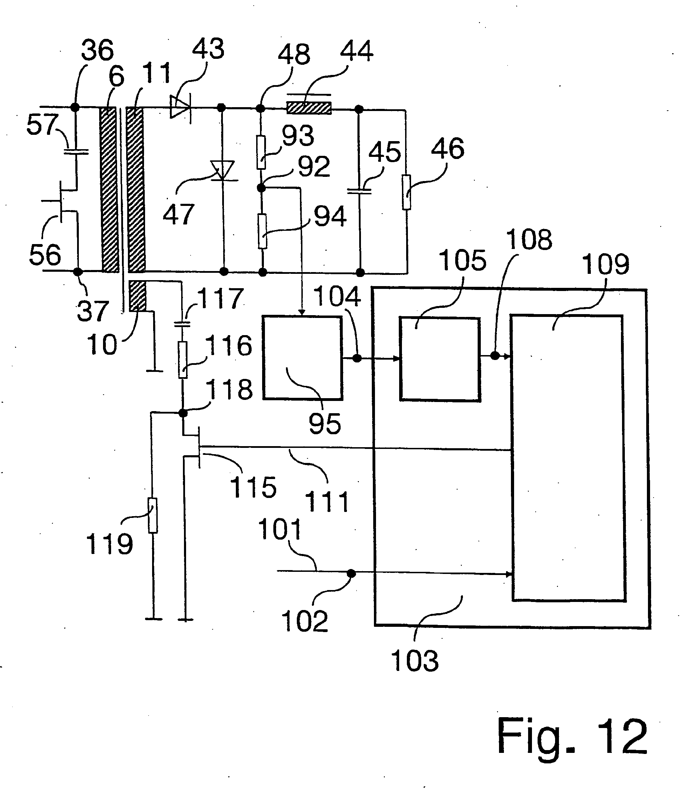

Die zu übertragenden Daten werden in Fig. 12, in der gleiche Teile mit denselben Bezugszeichen wie in Fig. 6 bezeichnet sind, seriell über eine Leitung 101 zugeführt, die z. B. über eine Schnittstelle RS 232 mit dem Ausgang eines am drehbaren Bauteil 18 vorgesehenen Controllers od. dgl. verbunden ist. Die Zuführung der Daten erfolgt auch hier mit einer Baudrate von z. B. 7800 Bit/s, d. h. mit einer Frequenz, die kleiner als die Frequenz der Schaltsignale 42 ist.

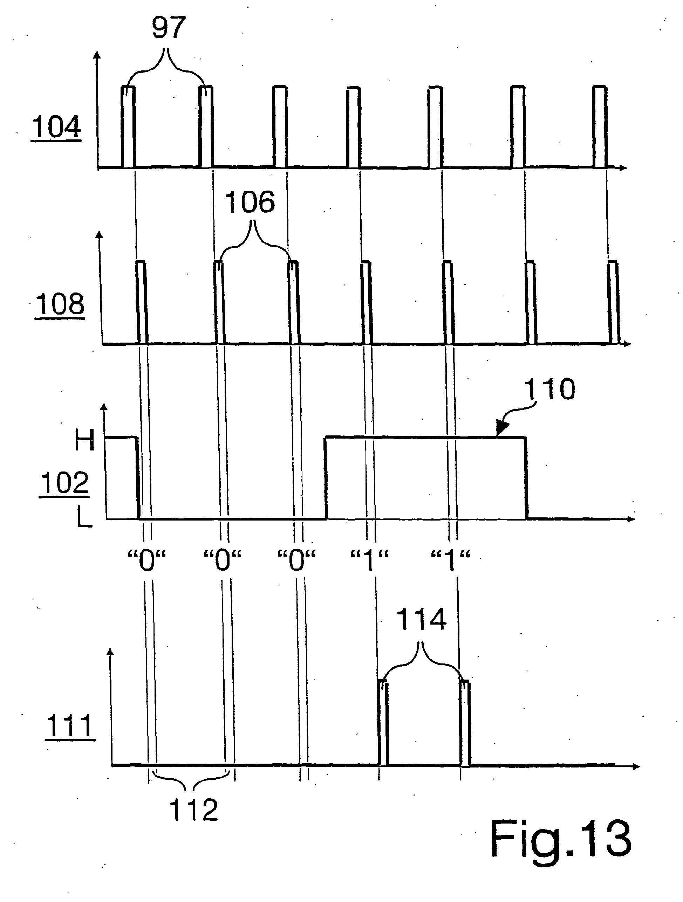

Die Daten werden zunächst einem Eingang 102 einer Schaltungsanordnung 103 zugeführt, die einen zweiten Eingang 104 hat, dem die am Anschluß 92 (Fig. 10) entstehenden Signale zugeführt werden, nachdem sie im Block 95 auf den erforderlichen Logik-Pegel reduziert worden sind und daher den Signalen 97 in Fig. 11 entsprechen (vgl. auch Fig. 13). Diese Signale werden zunächst in einer Verzögerungsschaltung 105 in verzögerte Signale 106 (Fig. 13) umgeformt, die einem Eingang 108 einer Schaltung 109 zugeführt werden. Die verzögerten Signale 106 entstehen dadurch, daß mit der negativen Flanke der Signale 97 ein nicht dargestellter Impulserzeuger angesteuert wird, der darauf hin je eines der Signale 106 abgibt.

Die Schaltung 109 dient im wesentlichen demselben Zweck wie die Schaltung 74 (Fig. 6), nämlich der Untersuchung der in Form einer Signalfolge 110 (Fig. 13) am Eingang 102 erscheinenden Daten auf ihren logischen Zustand. Die Signalfolge 110 hat gemäß Fig. 13 eine Form, die im wesentlichen der Form der Signalfolge 83 am Eingang 79 entspricht (vgl. Fig. 6 und 8). Befindet sich die Signalfolge 110 zum Zeitpunkt der negativen Flanke eines verzögerten Signals 106 auf dem Pegel L, dann wird das als logische "0" erkannt und an einem Ausgang 111 der Schaltung 109 (Fig. 12, 13) kein Impuls bzw. eine logische "0" erzeugt, wie an Stellen 112 in Fig. 13 angedeutet ist. Befindet sich dagegen die Signalfolge 110 zum Zeitpunkt der negativen Flanke des Signals 106 im Zustand H, dann wird das als logisch "1" erkannt und von der Schaltung 109 ein Schaltsignal 114 (Fig. 13) entsprechend einer logischen "1" erzeugt.

Der Ausgang 111 der Schaltungsanordnung 103 ist gemäß Fig. 12 mit dem Steuereingang eines elektrischen Schalters 115, z. B. eines Schalttransistors, verbunden. Dieser Schalter 115 liegt zwischen Masse und einem ersten Anschluß eines Widerstands 116, dessen anderer Anschluß mit einem Anschluß eines Kondensators 117 in Reihe geschaltet ist. Der andere Anschluß des Kondensators 117 ist mit dem einen Anschluß der am drehbaren Bauteil montierten Hilfswicklung 10 der Sekundärspulenanordnung 2 (Fig. 1) verbunden, deren anderer Anschluß an Masse liegt. Ein Anschlußpunkt 118 zwischen dem Schalter 115 und dem Widerstand 116 ist außerdem über einen als Spannungsteiler wirkenden Widerstand 119 an Masse gelegt. Wie Fig. 1 und 12 zeigen, ist die Hilfswicklung 10 induktiv mit den beiden Hauptwicklungen 6 und 11 der Primär- und Sekundärspulenanordnung 1 bzw. 2 gekoppelt.

Die Verzögerung der Signale 106, mittels derer die Signalfolge 110 ausgewertet wird, ist so gewählt, daß diese Signale 106 immer während der Zeitspanne t_{Aus} (Fig. 7) und immer dann erscheinen, wenn die in der Hauptwicklung 11 der Sekundärspulenanordnung in den Zeitintervallen t_{Ein} des Schalters 38 (Fig. 6) gespeicherte Energie weitgehend abgeflossen ist, die Hauptwicklung 11 der Sekundärspulenanordnung daher keine wesentliche Rückwirkung mehr auf die Hauptwicklung 6 der Primärspulenanordnung hat. Das hat zur Folge, daß der Hauptwicklung 6 der Primärspulenanordnung immer dann, wenn der Schalter 115 (Fig. 12) durch die Signale 114 (Fig. 13) in den leitenden Zustand gebracht wird, Energie entzogen wird, indem kurzzeitig ein Strom durch die Hilfswicklung 10, den Kondensator 117 und den Widerstand 116 fließt. Die dadurch an der Hilfswicklung 10 entstehende Spannung ist wegen des Fehlens einer Rückwirkung von der Hauptwicklung 11 der Sekundärspulenanordnung auf der Primärseite gut meßbar.

Die Signale 106 und daher auch die Signale 114 (Fig. 13) werden gemäß der obigen Beschreibung immer dann erzeugt, wenn zwischen den Signalen 97 an den Anschlußpunkten 92 und 104 gerade eine Impulspause vorhanden ist. Das ist gleichbedeutend damit, daß sich der Schalter 38 (Fig. 6) im ausgeschalteten und der Schalter 56 im eingeschalteten Zustand befindet.

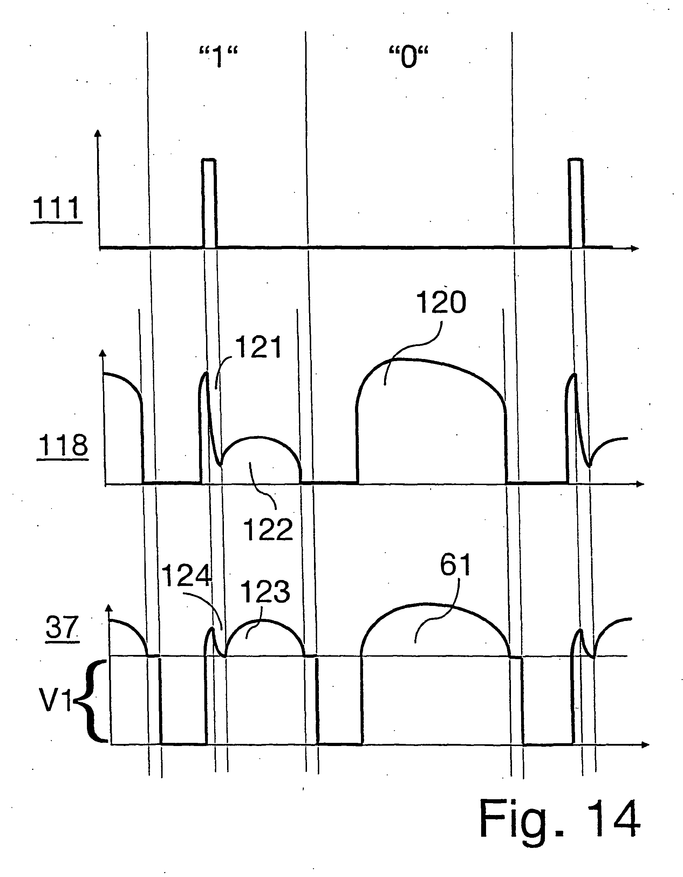

Die beschriebene Einschaltung des Schalters 115 in Fig. 12 wirkt sich am Anschlußpunkt 118 etwa in der aus Fig. 14 ersichtlichen Weise aus. Ist der Schalter 115 im Sperrzustand entsprechend einer "0" am Ausgang 111, dann hat ein Signal 120 am Anschlußpunkt 118 einen Verlauf, der dem Verlauf der Signale 61 am Anschlußpunkt 37 (Fig. 6, 7 und 12) ähnlich ist und durch die Gegenspannung verursacht wird. Ist der Schalter 115 dagegen im leitenden Zustand entsprechend einer "1" am Ausgang 111, dann wird die Hilfswicklung 10 kurzzeitig belastet, so daß sich im vorderen Bereich des Signals 120 ein charakteristischer Einbruch 121 ergibt und insgesamt ein Signal 122 entsteht, daß sich vom Signal 120 verhältnismäßig stark unterscheidet. Eine entsprechende Modifikation ergibt sich wegen der induktiven Kopplung auch an dem am stationären Bauteil befindlichen Anschlußpunkt 37 (Fig. 12 und 14), wodurch die Signale 61 (Fig. 7) in Signale 123 (Fig. 14) umgeformt werden, die ebenfalls durch einen charakteristischen Spannungseinbruch 124 im vorderen Bereich gekennzeichnet sind.

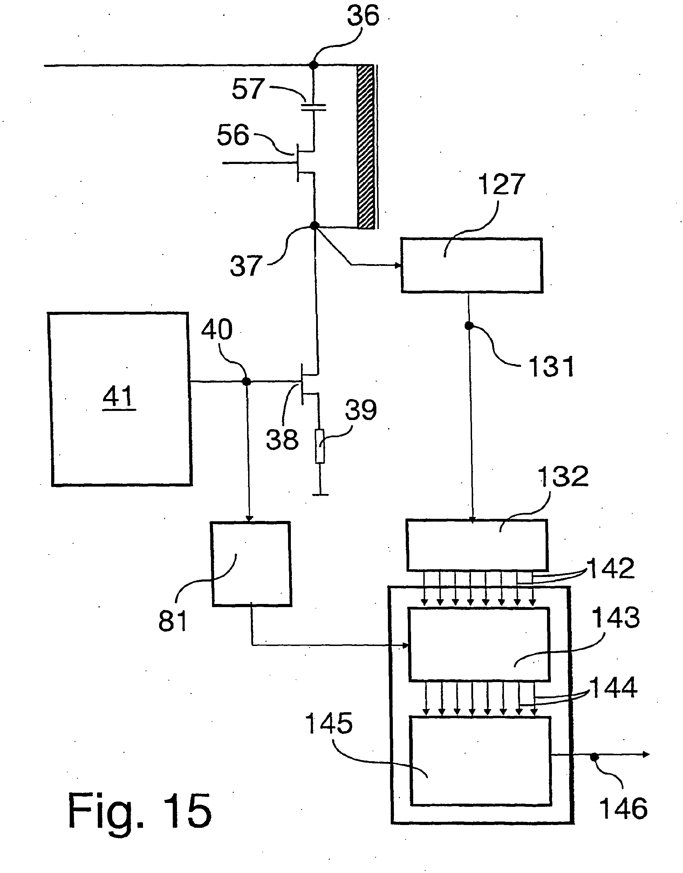

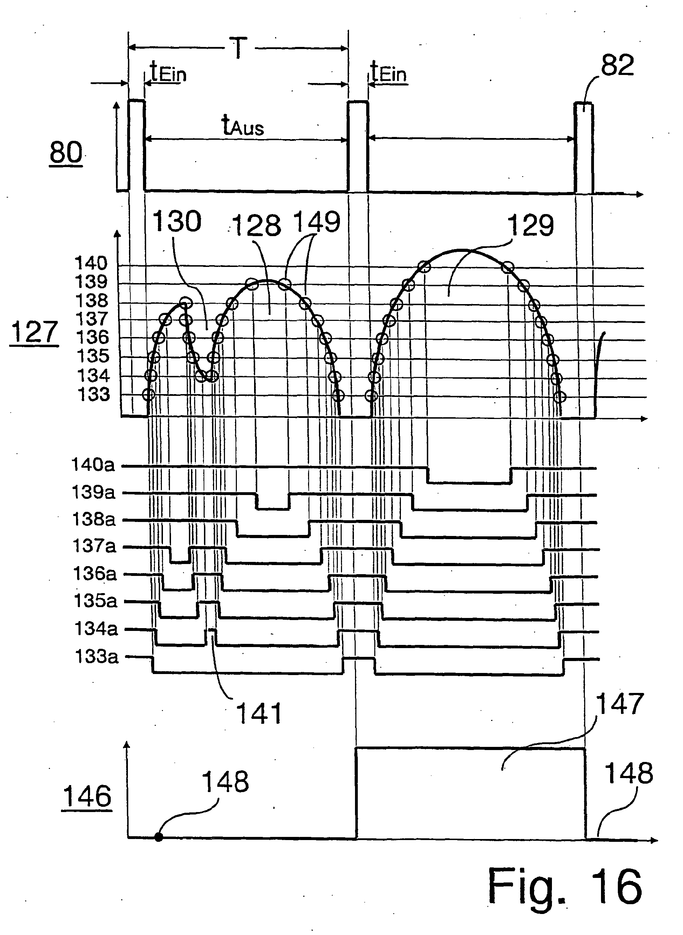

Bei der Übertragung von Daten vom drehbaren Bauteil zum stationären Bauteil lassen somit "0"-Signale die durch die Gegen-EMK entstehenden Signale 61 in Fig. 7 im wesentlichen unverändert, während "1"-Signale eine Modifikation der Gegen-EMK zur Folge haben und daher die Signale 61 zu den Signalen 123 verändern. Diese Veränderung wird erfindungsgemäß mit am stationären Bauteil montierten und nachfolgend anhand der Fig. 15 und 16 beschriebenen Mitteln gemessen und zur Wiedergewinnung der dem Eingang 102 (Fig. 12) zugeführten Information aus der modifizierten Gegen-EMK verwendet.

Nach Fig. 15, in der wiederum gleiche Teile mit denselben Bezugszeichen wie in Fig. 6 versehen sind, ist mit dem Anschlußpunkt 37 eine Subtrahierschaltung 127 verbunden, die dazu dient, den anhand der Fig. 7 erläuterten Gleichspannungsanteil (Spannung V1 der Spannungsquelle 35 in Fig. 6) von den Signalen 61 und 123 in Fig. 14 zu subtrahieren, wodurch aus Fig. 16 ersichtliche, vergrößert dargestellte Signale 128 entsprechend einer logischen "1" und 129 entsprechend einer logischen "0" entstehen, wobei die Signale 128 wie die Signale 122 und 123 in Fig. 14 einen Einbruch 130 aufweisen. Die Signale 128, 129 erscheinen, wie in Fig. 13 und 16 angedeutet ist, stets während der Phasen t_{Aus} des Schalters 38 in Fig. 6 bzw. 15. Zur Auswertung dieser Signale 128, 129 wird ein Ausgang 131 der Subtrahierschaltung 127 mit einem Eingang eines Schaltkreises 132 verbunden, der acht parallel geschaltete Komparatoren enthält, die jeweils auf unterschiedliche, in Fig. 16 schematisch angedeutete Triggerstufen 133 bis 140 eingestellt sind und bei deren Überschreiten Signale 133a bis 140a abgeben, die ebenfalls in Fig. 16 gezeigt sind. So ist z. B. ein erster Komparator so eingestellt, daß er ein Signal 133a erzeugt, d. h. am Ausgang normalerweise auf H liegt, jedoch in den L-Zustand übergeht, sobald und solange die Amplitude des Signals 128, 129 eine kleine, vorgewählte Triggerschwelle 133 überschreitet. Entsprechend gibt ein zweiter Komparator ein Signal 134a ab, das in den L-Zustand übergeht, sobald und solange die Amplitude des Signals 128, 129 einen etwas höheren Schwellwert 134 überschritten hat. Wie Fig. 16 zeigt, hat dies wegen des Einbruchs 130 zur Folge, daß das Signal 134a während einer Periodendauer des Signals 128 zweimal in den Zustand L übergeht, dazwischen an einer Stelle 141 jedoch kurzzeitig den Zustand H annimmt, während es innerhalb einer Periode des Signals 129 jeweils nur einmal vom Zustand H in den Zustand L übergeht. Entsprechendes gilt für die Signale 135a bis 139a. Das Signal 140a hat im Ausführungsbeispiel nur einen Übergang von H zu L im Signal 129, dagegen keinen solchen Übergang im Signal 128 zur Folge.

Die Ausgangssignale 134a bis 140a der Komparatoren des Schaltkreises 132 werden über entsprechend viele Ausgänge 142 einer Zählschaltung 143 zugeführt, die acht Zähler aufweist, deren Zähleingänge mit je einem der Ausgänge 142 verbunden sind. Die Zähler werden durch positive Flanken von Signalen zurückgesetzt und durch negative Flanken neu gestartet, die am Ausgang der auch aus Fig. 6 ersichtlichen Schaltung 81 erscheinen und Signalen 82 (Fig. 8) entsprechen, die aus den Schaltsignalen 42 (Fig. 7) abgeleitet sind und auch dem Eingang 80 zugeführt werden. Die Zählzyklen beginnen daher immer beim Beginn der Ausschaltzyklen t_{Aus} des Schaltnetzteils, und die Zähler werden durch jede negative Flanke der Signale 133a bis 140a um je eine Zählstufe weitergestellt.

Mit dem Rücksetzen der Zähler werden deren Zählergebnisse über entsprechend viele Ausgänge 144 (Fig. 15) in eine logische Auswerteeinheit 145 überführt. Die Zählergebnisse können je nach Fall 0, 1 oder 2 betragen. Im Fall eines Signals 129 werden beispielsweise alle Zähler das Ergebnis "1" anzeigen, während im Fall eines Signals 128 die Signale 133a und 138a und 139a jeweils zu einem Zählergebnis "1", die Signale 134a bis 137a dagegen jeweils zu einem Zählergebnis "2" führen. Ein Zählergebnis "0" würde durch die oberhalb der Triggerschwelle 139 liegende Triggerschwelle 140 für den Fall der Auswertung eines Signals 128 erhalten.

Die logische Auswerteeinheit 145 ist beispielsweise so aufgebaut, daß sie an einem Ausgang 146 eine logische "1" abgibt, wenn während einer Periode T wenigstens zwei Zähler den Zählerstand "2" annehmen. Erreicht dagegen nur ein Zähler oder gar kein Zähler den Zählerstand "2" oder werden nur Zählerstände "1" erhalten, dann wird am Ausgang 146 eine logische "0" abgegeben. Damit entspricht mit hoher Sicherheit eine logische "1" der Erkennung eines Signals 128 und eine logische "0" der Erkennung eines Signals 129. Natürlich können bei der Auswertung auch andere Zuordnungen getroffen und mehr oder weniger als acht Zähler verwendet werden.

Die am Ausgang 146 erscheinende Signalfolge ist in Fig. 16 dargestellt. Daraus ist ersichtlich, daß eine im Signal 128 enthaltene logische "1" um einen Takt verzögert am Ausgang 146 abgebildet wird (Signalabschnitt 147 in Fig. 16), weil bei Anwendung der beschriebenen Auswerteeinheit 145 erst am Ende des Signals 128 feststeht, zu welchen Zählerständen dieses Signal 128 in der Zählschaltung 143 geführt hat. Entsprechend wird ein 0-Signal 129 um einen Takt verzögert am Ausgang 146 abgebildet (Signalabschnitt 148). Diese Verschiebung der Datenfolge um einen Takt ist analog zur Verschiebung der Datenfolge, die vom stationären Bauteil auf das drehbare Bauteil überführt wird, wegen der bevorzugten asynchronen Datenübertragung unschädlich, weil etwa vorhandene Start- und Stopbits od. dgl. nicht verloren gehen.

Im übrigen ist die beschriebene Übertragung der Daten von der Sekundärseite zur Primärseite unabhängig davon, ob die Schaltsignale 82 in Fig. 15 und 16 wegen einer gleichzeitig in entgegengesetzter Richtung erfolgenden Datenübertragung die kurze oder lange Periodendauer T1 bzw. T2 (Fig. 9) aufweisen oder die momentanen Tastverhältnisse t_{Ein}/T (Fig. 7) größer oder kleiner sind, da die Übertragung immer nur während der Impulspausen der Schaltsignale stattfindet.

Bei einem derzeit für am besten gehaltenen Ausführungsbeispiel werden die verschiedenen Blöcke durch die folgenden auf dem Markt erhältlichen IC-Schaltkreise verwirklicht:

| | |
|---|---|
| Block 41: | L 4990A |
| Block 59: | L 6380 |
| Blöcke 88,89,103,143,145: | IC 9572 |
| Block 127: | LM 6142 |
| Block 132: | MAX 942 |
| Blöcke 81, 95: | 74 HC 14. |

Die Erfindung ist nicht auf die beschriebenen Ausführungsbeispiele beschränkt, die auf vielfache Weise abgewandelt werden können. Dies gilt insbesondere für die beschriebenen Auswerteeinheiten. Möglich wäre beispielsweise, die Signale 128, 129 mit einem schnellen digitalen Signalprozessor abzutasten und ihre Amplituden an einer Vielzahl von Punkten 149 (Fig. 16) mit einem Analog/Digital-Wandler zu messen. Diese Meßwerte könnten dann dazu benutzt werden, die Einbrüche 130 festzustellen und daher eine logische "1" von einer logischen "0" zu unterscheiden. Weiter ist es möglich, die Datenübertragung von der Primär- zur Sekundärseite gleichzeitig mit der Datenübertragung von der Sekundär- zur Primärseite durchzuführen, da sich die beschriebenen Modifikationen der Frequenzen bzw. der Gegenspannungen nicht gegenseitig stören. Während jeder Periodendauer T kann daher eine "0"- bzw. "1" sowohl in der einen als auch in der anderen Richtung übertragen werden. Dabei ist klar, daß die Zuordnungen beliebig sind, d. h. in Fig. 11 und 16 könnten die Signale 27a bzw. 128 als "0" und die Signale 97b bzw. 129 als logische "1" bewertet werden. In jedem Fall ergibt sich der Vorteil, daß dasselbe Schaltnetzteil und derselbe Übertrager bzw. Teile davon sowohl zur Energie- als auch zur Informationsübertragung genutzt werden können und sich beide Übertragungsarten nicht gegenseitig behindern.

Weiter stellen die anhand der Fig. 1 bis 5 erläuterten Übertrager nur Beispiele dar, die je nach Zweckmäßigkeit abgewandelt und mit anderen als den beschriebenen Wicklungen versehen werden können. Das gilt insbesondere dann, wenn es sich um andere Textilmaschinen wie z. B. Flachstrickmaschinen handelt, bei denen ein bewegbarer Schlitten vorgesehen ist, der eine lineare Relativbewegung zu einem Nadelbett ausübt, so daß die beschriebene induktive Kopplung zwischen der Primär- und der Sekundärspulenanordnung über den gesamten Schlittenhub vorhanden sein müßte. Der Ausdruck "bewegbar" soll daher vorzugsweise alle Relativbewegungen zwischen den beiden Bauteilen 16 und 18 in Fig. 1 einschließen, wobei auch beide Bauteile bewegbar angeordnet sein könnten. Weiterhin ist die Zahl der in Fig. 15 und 16 dargestellten Triggerstufen an sich beliebig, sofern nur eine "0" von einer "1" unterschieden werden kann. Möglich wäre es in diesem Zusammenhang auch, zunächst Hüllkurven zu den Signalen 128, 129 zu erzeugen und die Triggerschwellen danach automatisch an die sich im Einzelfall ergebenden Pegel der Gegen-EMK anzupassen. Ferner können die angebenen Frequenzen und Spannungen in weiten Grenzen variiert werden. Außerdem ist klar, daß zur Realisierung der beschriebenen Energie- und Informationsübertragung andere als die beschriebenen Hardware- und/oder Software-Komponenten eingesetzt werden können und insbesondere die Auswertung der übertragenen Daten überwiegend mit Hilfe einer speziellen Software erfolgen kann. Weiterhin kann anstelle der beschriebenen asynchronen Datenübertragung natürlich auch eine synchrone Datenübertragung vorgesehen werden, indem Zwischenspeicher zur Aufnahme von beliebig schnell ankommenden Daten vorgesehen und diese Daten dann mit der Frequenz bzw. dem Takt des Schaltnetzteils aus dem Zwischenspeicher ausgelesen werden. Schließlich versteht sich, daß die verschiedenen Merkmale auch in anderen als den beschriebenen und dargestellten Kombinationen angewendet werden können.

## Patentansprüche

1. Vorrichtung mit zwei relativ zueinander bewegbaren Bauteilen (16, 18) und einer Einrichtung zur gleichzeitigen Übertragung von elektischer Energie und Information zwischen den Bauteilen (16, 18) durch berührungslose, induktive Kopplung, wobei die Einrichtung einen gemeinsamen, zur Übertragung der Energie und der Information bestimmten Übertrager mit einer am einen Bauteil (16) montierten Primärspulenanordnung (1, 24) und einer am anderen Bauteil (18) montierten Sekundärspulenanordnung (2, 27), eine an die Primärspulenanordnung (1, 24) angeschlossene Signalquelle zur Abgabe von der Energieübertragung dienenden Signalen und an den Bauteilen (16, 18) vorgesehene erste bzw. zweite Mittel zur Modifizierung dieser Signale in Abhängigkeit von der zu übertragenden Information bzw. zur Wiedergewinnung der Information aus den modifizierten Signalen aufweist, **dadurch gekennzeichnet, daß** die Signalquelle zur Abgabe der Signale mit einem änderbaren Tastverhältnis als ein auf Pulsweitenmodulation basierendes Schaltnetzteil ausgebildet ist und die ersten Mittel eine Einrichtung zur Modifizierung der Taktfrequenz in Abhängigkeit von der vom einen Bauteil (16) zum anderen Bauteil zu übertragenden Information enthalten und/oder nur in Pausen (t_{Aus}) dieser Signale aktivierbar sind.

2. Vorrichtung nach Anspruch 1, **dadurch gekennzeichnet, daß** die Primär- und die Sekundärspulenanordnung (1, 24; 2, 27) einen gemeinsamen Kern mit zwei durch einen Luftspalt (15; 32) getrennten Kernhälften (3, 8; 25, 28) aufweisen.

3. Vorrichtung nach Anspruch 1 oder 2, **dadurch gekennzeichnet, daß** die Primär- und die Sekundärspulenanordnung (1, 24; 2, 27) je eine Haupt- und eine Hilfswicklung (6, 11 bzw. 5, 10) enthalten.

4. Vorrichtung nach Anspruch 3, **dadurch gekennzeichnet, daß** die Hauptwicklung (6) der Primärspulenanordnung (1) an eine Gleichspannungsquelle (35) und einen elektronischen Schalter (38) angeschlossen ist und das Schaltnetzteil eine PWM-Steuerung (41) zur Ein- und Ausschaltung des Schalters (38) aufweist.

5. Vorrichtung nach Anspruch 4, **dadurch gekennzeichnet, daß** die Hilfswicklung (5) der Primärspulenanordnung (1) zur Erzeugung eines Signals eingerichtet ist, das der Änderung des Tastverhältnisses in Abhängigkeit von der Größe eines an die Sekundärwicklungsanordnung (2) angeschlossenen Verbrauchers (46) dient.

6. Vorrichtung nach einem der Ansprüche 3 bis 5, **dadurch gekennzeichnet, daß** die nur in den Pausen (t_{Aus}) aktivierbaren ersten Mittel die Hilfswicklung (10) der Sekundärspulenanordnung (2) enthalten.

7. Vorrichtung nach Anspruch 6, **dadurch gekennzeichnet, daß** die Hilfswicklung (10) der Sekundärspulenanordnung (2) zur Modifizierung der beim Betrieb des Schaltnetzteils in der Hauptwicklung (6) der Primärspulenanordnung (1) entstehenden Gegen-EMK eingerichtet ist und daß die zweiten Mittel (127 bis 146) zur Wiedergewinnung der Information aus der modifizierten Gegen-EMK eingerichtet sind.

8. Vorrichtung nach Anspruch 7, **dadurch gekennzeichnet, daß** die Hilfswicklung (10) der Sekundärspulenanordnung (2) eine Reihenschaltung mit einem Schalter (115) bildet, der in Abhängigkeit von der vom anderen Bauteil (18) zum einen Bauteil (16) zu übertragenden Information schaltbar ist.

9. Vorrichtung nach einem der Ansprüche 1 bis 8, **dadurch gekennzeichnet, daß** die ersten Mittel zur Modifizierung der vom Schaltnetzteil erzeugten Signale so eingerichtet sind, daß die Information bidirektional und im wesentlichen gleichzeitig über den Übertrager übertragbar ist.

10. Vorrichtung nach einem der Ansprüche 1 bis 9, **dadurch gekennzeichnet, daß** die Information asynchron übertragbar ist.

11. Vorrichtung nach einem der Ansprüche 1 bis 10, **dadurch gekennzeichnet, daß** das eine Bauteil (16) stationär und das andere Bauteil (18) bewegbar angeordnet ist.

12. Rundstrickmaschine, **dadurch gekennzeichnet, daß** sie mit einer Vorrichtung nach einem oder mehreren der Ansprüche 1 bis 11 versehen ist.

## Claims

1. Apparatus with two components (16, 18) movable relative to one another and a device for simultaneous transmission of electric power and information between the components (16, 18) by contactless, inductive coupling, wherein the device comprises a common transformer for the transmission of the power and the information, with a primary coil arrangement (1, 24) mounted on one component (16) and a secondary coil arrangement (2, 27) mounted on the other component (18), a signal source connected to the primary coil arrangement (1, 24) for delivering signals serving for the power transmission and first and second means provided on the components (16, 18) respectively for modifying these signals in dependence on the information to be transmitted and for recovering the information from the modified signals, **characterized in that** the signal source for delivering the signals with a variable mark-space ratio is in the form of a switched mode power supply based on pulse width modulation and the first means contain a device for modifying the clock frequency in dependence on the information to be transmitted from one component (16) to the other component and/or can be activated only in pauses (t_{Off}) of these signals.

2. Apparatus according to claim 1, **characterized in that** the primary and the secondary coil arrangements (1, 24; 2, 27) comprise a common core with two core halves (3, 8; 25, 28) separated by an air gap (15; 32).

3. Apparatus according to claim 1 or 2, **characterized in that** the primary and the secondary coil arrangements (1, 24; 2, 27) each have a main and an auxiliary coil (6, 11 and 5, 10 respectively).

4. Apparatus according to claim 3, **characterized in that** the main coil (6) of the primary coil arrangement (1) is connected to a direct voltage source (35) and an electronic switch (38) and the switched mode power supply comprises a PWM controller (41) for turning the switch (38) on and off.

5. Apparatus according to claim 4, **characterized in that** the auxiliary coil (5) of the primary coil arrangement (1) is arranged to generate a signal which serves to alter the mark-space ratio in dependence on the value of a load (46) connected to the secondary coil arrangement (2).

6. Apparatus according to any of claims 3 to 5, **characterized in that** first the means which can be activated only in the pauses (t_{Off}) include the auxiliary coil (10) of the secondary coil arrangement (2)

7. Apparatus according to claim 6, **characterized in that** the auxiliary coil (10) of the secondary coil arrangement (2) is arranged to modify the back EMF occurring in the main coil (6) of the primary coil arrangement (1) in operation of the switched mode power supply and **in that** the second means (127 to 146) are arranged to recover the information from the modified back EMF.

8. Apparatus according to claim 7, **characterized in that** the auxiliary coil (10) of the secondary coil arrangements (2) forms a series circuit with a switch (115) which can be switched in dependence on the information to be transmitted from the other component (18) to the one component (16).

9. Apparatus according to any of claims 1 to 8, **characterized in that** the first means for modifying the signal generated by the switched mode power supply are so arranged that the information can be transmitted bidirectionally and substantially simultaneously through the transformer.

10. Apparatus according to any of claims 1 to 9, **characterized in that** the information can be transmitted asynchronously.

11. Apparatus according to any of claims 1 to 10, **characterized in that** the one components (16) is stationary and the other component (18) is movable.

12. A circular knitting machine, **characterized in that** it is provided with an apparatus according to one or more of claims 1 to 11.

## Revendications

1. Dispositif comprenant deux éléments mobiles l'un par rapport à l'autre (16, 18) et un équipement pour la transmission simultanée d'énergie électrique et d'information entre les éléments (16, 18) par couplage inductif sans contact, l'équipement présentant un organe de transmission commun destiné à la transmission de l'énergie et de l'information avec un arrangement de bobine primaire (1, 24) monté sur un élément (16) et un arrangement de bobine secondaire (2, 27) monté sur l'autre élément (18), une source de signaux pour l'émission de signaux servant à la transmission d'énergie et des premiers, respectivement deuxièmes moyens prévus sur les éléments (16, 18) pour modifier ces signaux en fonction de l'information à transmettre, respectivement pour extraire l'information des signaux modifiés, **caractérisé en ce que** la source de signaux pour l'émission des signaux avec un rapport cyclique modifiable est conçue comme une alimentation électrique à découpage basée sur la modulation de largeur d'impulsions et que les premiers moyens contiennent un équipement pour modifier la fréquence de cycles en fonction de l'information à transmettre d'un élément (16) à l'autre élément et/ou ne sont activables que pendant les pauses (t_{Aus}) de ces signaux.

2. Dispositif selon la revendication 1, **caractérisé en ce que** les arrangements de bobine primaire et secondaire (1, 24 ; 2, 27) présentent un noyau commun avec deux demi-noyaux (3, 8 ; 25, 28) séparés par un entrefer (15 ; 32).

3. Dispositif selon la revendication 1 ou 2, **caractérisé en ce que** les arrangements de bobine primaire et secondaire (1, 24 ; 2, 27) contiennent chacun un enroulement principal et un enroulement auxiliaire (6, 11 respectivement 5, 10).

4. Dispositif selon la revendication 3, **caractérisé en ce que** l'enroulement principal (6) de l'arrangement de bobine primaire (1) est connecté à une source de tension continue (35) et un commutateur électronique (38) et que l'alimentation électrique à découpage présente une commande PWM (41) pour l'activation et la désactivation du commutateur (38).

5. Dispositif selon la revendication 4, **caractérisé en ce que** l'enroulement auxiliaire (5) de l'arrangement de bobine primaire (1) est conçu pour générer un signal qui sert à modifier le rapport cyclique en fonction de la grandeur d'un consommateur (46) connecté à l'arrangement de bobine secondaire (2).

6. Dispositif selon l'une des revendications 3 à 5, **caractérisé en ce que** les premiers moyens activables seulement pendant les pauses (t_{Aus}) contiennent l'enroulement auxiliaire (10) de l'arrangement de bobine secondaire (2).

7. Dispositif selon la revendication 6, **caractérisé en ce que** l'enroulement auxiliaire (10) de l'arrangement de bobine secondaire (2) est conçu pour modifier la force contre-électromotrice apparaissant dans l'enroulement principal (6) de l'arrangement de bobine primaire (1) lors du fonctionnement de l'alimentation électrique à découpage et que les deuxièmes moyens (127 à 146) sont conçus pour extraire l'information de la force contre-électromotrice modifiée.

8. Dispositif selon la revendication 7, **caractérisé en ce que** l'enroulement auxiliaire (10) de l'arrangement de bobine secondaire (2) forme un montage en série avec un commutateur (115) qui est commutable en fonction de l'information à transmettre de l'autre élément (18) à l'élément (16).

9. Dispositif selon l'une des revendications 1 bis 8, **caractérisé en ce que** les premiers moyens pour modifier les signaux générés par l'alimentation électrique à découpage sont conçus de façon que l'information soit transmissible de manière bidirectionnelle et essentiellement simultanée par l'intermédiaire de l'organe de transmission.

10. Dispositif selon l'une des revendications 1 bis 9, **caractérisé en ce que** l'information est transmissible de manière asynchrone.

11. Dispositif selon l'une des revendications 1 bis 10, **caractérisé en ce que** l'élément (16) est stationnaire et l'autre élément (18) mobile.

12. Métier à tricoter circulaire, **caractérisé en ce qu'**il est pourvu d'un dispositif selon l'une ou plusieurs des revendications 1 à 11.
